# EUROPEAN PATENT SPECIFICATION

(11) **EP 2 561 946 B1**
(45) Date of publication and mention of the grant of the patent: **20.09.2017**
(21) Application number: 11716971.4
(22) Date of filing: 04.02.2011
(51) Int. Cl.: B23K 11/11, C21D 1/673, C21D 8/04, B23K 11/34, C21D 9/00, C21D 9/50, C21D 1/09

(54) **STRUCTURAL PART FOR A VEHICLE AND METHOD TO PRODUCE THIS STRUCTURAL PART.**
BAUTEIL FÜR EIN FAHRZEUG UND VERFAHREN ZUR HERSTELLUNG DIESES BAUTEILS.
COMPOSANT DE LA STRUCTURE D'UN VEHICULE ET PROCEDE DE FABRICATION DU DIT COMPOSANT.

(30) Priority: 19.04.2010 ES 201030563
(43) Date of publication of application: 27.02.2013
(60) Divisional application: 14197596.1
(73) Proprietor: Autotech Engineering, A.I.E., 08365 Sant Esteve Sesrovires, Barcelona (ES)
(72) Inventor: GARCIA, Michel, E-08800 Sitges, Barcelona (ES); VILA FERRER, Elisenda, E-08904 Hospitalet De Llobregat, Barcelona (ES); PERARNAU RAMOS, Francesc, E-08201 Sabadell, Barcelona (ES)
(74) Representative: ZBM Patents - Zea, Barlocci & Markvardsen
(86) International application number: PCT/ES2011/070075
(87) International publication number: WO 2011/131809

(56) References cited:
- DE-A1-102004 023 579
- JP-A- 2009 197 253
- US-A1- 2004 003 874
- US-A1- 2010 086 803
- US-A1- 2011 016 719
- DATABASE WPI Week 198825 Thomson Scientific, London, GB; AN 1988-168291 XP002643974, & DD 253 551 A3 (AS USSR LASERS TECH) 27 January 1988 (1988-01-27)

## Description

### Technical Field of the Invention

The invention relates to a method for the manufacture of a part of a structural component of a vehicle obtained from a high strength or ultra-high strength steel plate with a silicon and aluminium-based coating intended to form part of a complex structure, such as the structure of an automotive vehicle. The structural component of the invention can be, by way of example, any one of the following open list: a window reinforcement, a bumper beam, an aperture upright reinforcement, a central pillar reinforcement or a door reinforcement.

Said component is formed by at least one first part which has been subjected during the process for obtaining it to a specific treatment to change its microstructure in a localized and previously selected zone.

### Background of the Invention

In the automotive field, the use of hot stamping method for forming structural components of the vehicle is widespread. A homogenous change in the microstructure of the starting metal material and forming the desired finished piece are achieved simultaneously during this method.

Thus, the microstructure of 22MnB5 steel plates of a thickness between 0.8 and 2.5 mm, for example, frequently used in the automotive field due to their mechanical performance after stamping, is typically converted in two steps from ferrite-perlite to austenite by means of a specific heat treatment followed by a martensitic phase transformation during cooling in the stamping presses.

For the purpose of obtaining pieces with localized zones having different hardness and ductility, variants of the typical methods by means of which localized zones of the parts obtained do not show a pure martensitic microstructure, causing the finished piece to be slightly more ductile than the parts obtained following the typical method, have recently been disclosed.

This is achieved by reducing the cooling rate, only in those selected zones, to a rate under the required rate of 27 K/s, which is essential for reaching a pure martensitic microstructure.

To put these variants of the typical methods into practice, the patent documents DE 102005032113 and EP 1715066 propose the use of presses the pressing plates or bodies of which are provided in localized zones with heating means to heat the desired zones of the piece during the manufacture, as well as with insulating means so that the heat energy transmitted to said zones is controlled and localized.

An objective of the present invention is an alternative method for achieving the same result, as well as a structural component of a vehicle that can be obtained by means of the method of the invention.

Another objective of the present invention is a method that does not require changing tools for the hot stamping operation to be put into practice. In other words, it does not require replacing the presses which have been used until now with presses with sectors demarcated by insulating elements and that incorporate heating means.

According to another aspect of the invention, it is desirably for the alternative method to be of application for obtaining structural components obtained from a USIBOR® 1500 P steel plate.

Generally, the structural components of a vehicle are usually formed in turn by the connection of two or more parts resulting from hot stamping formation of a steel plate with a silicon and aluminium-based coating, of a thickness comprised between 1 and 3 mm. The connection of said parts can be done by arc, laser, resistance welding, etc.

Spot welding, in particular, which is a resistance welding method, is a very well known technique applied in the automotive industry. Nevertheless, the occurrence of problems in welds of this type due to the occurrence of new high strength (HSS) or of ultra-high strength (UHSS) steels used to manufacture parts which form the structural components of a vehicle when connected, has recently been detected. It has specifically been found that when two parts of high or ultra-high strength steels are connected by means of a spot weld, the hardness drastically decreases in the heat affected zone due to the weld. Due to the large difference between the hardnesses of the rest of the parts and the weld with the heat affected zone due to the weld, the stresses are concentrated precisely in said zone and the breakage of the structural component begins right in the heat affected zone. In contrast, the difference of hardnesses between the heat affected zone and the rest of the part in normal steel is not that large, so the breakage starts at a point of the base material of the part.

Different methods, such as applying frequency during the spot welding process, for example, have been tested to solve this problem, but not altogether satisfactory results have been achieved.

Therefore, another objective of the present invention consists of how to obtain a structural component of a vehicle which does not suffer this problem in the case of being formed by the connection of two parts connected by spot welding.

DE 10 2004 023 579 discloses a process for heat treatment of a stainless steel joint part involving heat treatment of a partial region of the part with resultant softening of the steel.

US 2004/003874 discloses a track member for a linear motion guide, having a plurality of rows of portions to be hardened which are thermally influenced on each other, the track member being hardened by emitting laser beams so as to simultaneously irradiate a plurality of rows of portions of the material to be hardened, and moving the laser beams irradiating the rows of portions to be hardened relatively in a longitudinal direction of the portions to be hardened.

### Disclosure of the Invention

For the purpose of providing a solution to the problems raised, a method for the manufacture of a part of a structural component of a vehicle, such as an automotive vehicle, intended to be connected by spot welding to at least a second part, is disclosed. The method according to the invention comprises the operation of subjecting a high strength or ultra-high strength steel plate or sheet with a protective coating and of a thickness comprised between 1 and 3 mm, to a prior hot stamping formation operation. The protective coating is silicon and aluminium-based which protects the plate from the effects of corrosion, decarburization, oxidation during heat treatments to which the plate can be subjected, etc.

The method is essentially characterized in that it comprises the subsequent operation of subjecting at least one localized and previously selected zone of said first part to a subsequent heat treatment, irradiating it with a diode laser beam of a power comprised between 500 W and 6 kW until reaching a temperature comprised between 400 °C and 900 °C, then leaving the first part to cool in order to change its microstructure, providing said localized zone with an intentionally lower martensite content and accordingly with a lower yield strength and greater elongation in comparison with those of its adjacent zones not subjected to said heat treatment.

According to the invention, after being subjected to the subsequent heat treatment in the localized zone, the first part is left to cool at a cooling rate that is equal to or less than 10 °C/s.

According to an embodiment, the subsequent heat treatment in the localized zone is done by marking out a predetermined figure thereon by means of a diode laser beam with an optic having a parallelepiped cross-section, the rate of advance of the laser beam being from 4 a 20 mm/s.

In a preferred variant, the method comprises the operation of irradiating one and the same zone, or at least part of it, more than once with the diode laser beam.

According to another feature of the method, the localized zone is provided with a microstructure mostly or entirely made up of ferrite, perlite, tempered martensite or a mixture of any of the foregoing by means of said radiation and subsequent cooling.

According to the invention, a method for the manufacture of a structural component of a vehicle, which is characterized in that the first step consists of the manufacture of a first part according to the previously described method, followed by a step of connecting a second part to said first part by spot welding in the localized zone of the first part, i.e., the zone that has been heat treated by means of the diode laser beam, is disclosed.

The application of the diode laser in the localized zone of the first part followed by the cooling process causes the mentioned change of the microstructure of the localized zone, decreasing its martensite content in the localized zone, and therefore, decreasing its yield strength and increasing its elongation, in comparison with the rest of the part, which makes said localized zone an energy absorption zone in the event of a collision. In addition to these effects, the heat treatment applied in the localized zone, which is the zone by which the first part will subsequently be connected to the second part by means of spot welding, causes the prior decrease of the hardness in said zone, such that once the spot welding has been performed, the difference between the hardness of the part and the weld is not so different from the hardness of the heat affected zone due to the weld, and consequently, the breakage is localized in the base material of the part, not in the heat affected zone.

Also herein disclosed is a structural component of a vehicle, formed by a first part obtained from a high strength (HSS) or ultra-high strength (UHSS) steel plate with a protective coating, of a thickness comprised between 1 and 3 mm which, having been subjected to a prior hot stamping formation operation, comprises at least one localized zone, which is different from a zone which has been laser welded, said localized zone having been selectively subjected, after the formation of the first part, to a heat treatment by means of a high power diode laser beam followed by a cooling step to change its microstructure, providing said localized zone with a martensite content intentionally less than that of the rest of the part for the purpose of improving the spot weldability of the first part to a second adjacent part. Advantageously, by reducing the martensite content in the localized zone, the yield strength of said zone is reduced and its elongation increased, which is favorable for energy absorption in the event of a collision.

According to another feature of such a component, said component comprises a second part, also obtained from a high strength (HSS) or ultra-high strength (UHSS) steel plate hot formed by stamping, connected to the first part by means of spot welding in the localized zone of the first part.

According to another feature, the structure of said localized zone is ferrite and perlite based, having been eliminated the martensite structure obtained of the hot forming of the first part.

In an embodiment the first part, which forms the or a part of the component, comprises several localized zones, each in the form of specks, stains or strips adjacent to one another and in a number sufficient for modifying the mechanical properties of said localized zones of the plate, such as its tensile strength, when it is integrated in a complex structure, for example the structure of an automotive vehicle.

According to another feature, the tensile strength of the localized zone or localized zones of the first part of the finished component has a value between 30% and 50% of the tensile strength measured after its hot forming and prior to being subjected to the heat treatment by means of the diode laser beam.

According to the invention, the plate from which the finished component is obtained is boron steel plate, and its tensile strength measured after hot forming is comprised between 1200 MPa and 1600 MPa.

According to the invention, the protective coating of the plate is aluminium and silicon coating.

### Brief Description of the Drawings

A structural component in the form of a central reinforcement of an automotive vehicle, another in the form of an upright between the back door and the plate glass, and different variants of a localized zone, selectively irradiated with a laser beam for putting the invention into practice, as well as conducted test results, are illustrated in the attached drawings by way of non-limiting example. Specifically:
Figure 1 is a plan view of a central reinforcement in which a part which has been selectively irradiated with a laser beam according to the invention has been indicated by shading;
Figure 2 is a plan view of another central reinforcement in which four parts which have been selectively irradiated with a laser beam according to the invention have been indicated by shading;
Figure 3 is a schematic view of several forms that the laser beam used to irradiate the localized zones can have;
Figures 4 and 5 show two possible variants for the formation of localized zones irradiated with a laser beam intended for modifying the mechanical properties of the stamped plate, with a wave-shaped distribution and with another distribution based on adjacent square dots forming a zigzag line;
Figures 6 and 7 show in detail two examples of laser irradiation of one of the localized side zones of Figure 2, presenting in both cases a linear distribution of irradiated dots separate from one another, with an oval shape and with a square shape, respectively;
Figure 8 shows a graph in which the hardness of two localized zones of structural components which have been spot welded are compared, with the difference that one of the zones has been selectively irradiated with a diode laser beam for putting the invention into practice before spot welding;
Figure 9 shows two spot welds in respective localized zones of corresponding structural components, of which only the second component comprises a zone which has been selectively irradiated with a diode laser beam for putting the invention into practice before spot welding;
Figure 10 is an elevation view of the part of the body of a vehicle in which the structural component which forms the upright existing between the front door and the plate glass has been marked; and
Figure 11 is a section view according to section C-C of Figure 10 in which a localized zone selectively irradiated with a diode laser beam for putting the invention into practice before spot welding is shown.

### Embodiments

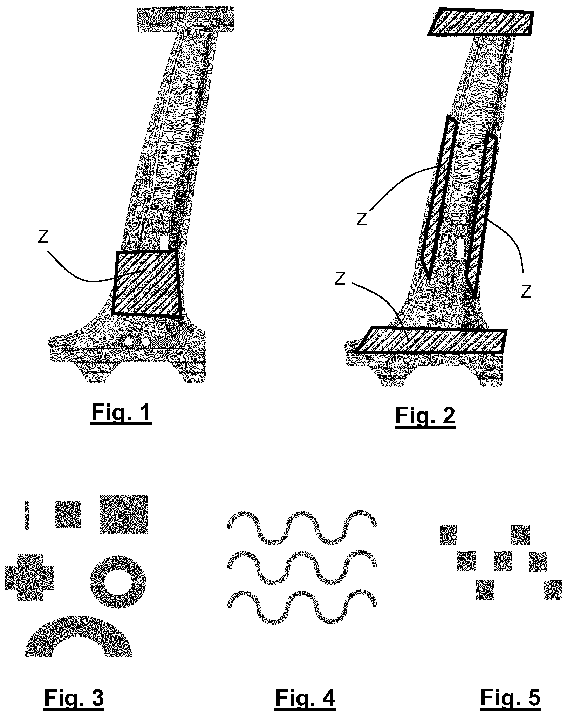

Figure 1 depicts a central reinforcement of an automotive vehicle in which the part which comprises in a localized manner at least one localized zone Z which has been subjected to a second heat treatment to change its microstructure has been indicated in the form of shading for the reader's understanding. Whereas the part of the central reinforcement that is not shaded has not been subjected to any heat treatment after the conventional hot stamping method for forming the component, its original microstructure having been transformed into a martensite microstructure, at least part of the surface of the shaded zone has been subjected, after hot stamping the component, to a second heat treatment irradiating it with a diode laser beam of a power comprised between 500 W and 6 kW until reaching a temperature comprised between 400 °C and 900 °C, the component then having been left to cool in a controlled manner at a rate comprised between 1 °C/s and 10 °C/s, providing said localized zone Z with an intentionally lower martensite content, and accordingly with a lower yield strength and greater elongation, in comparison with those of its adjacent zones not subjected to said heat treatment, not shaded in Figure 1. Unlike Figure 1, in Figure 2 the central reinforcement of an automotive vehicle comprises a total of four localized zones Z which have been subjected to the same treatment described for Figure 1.

The heat treatment applied by means of the diode laser beam followed by the mentioned cooling is an improvement in the performance in the event of collision of the structural components of the vehicles, generally formed by several parts connected by resistance spot welding. It has been found in collision testing that cracks start right at the resistance spot welds. This is due to a decrease of the mechanical properties in the heat affected zone (HAZ) of the resistance spot, specifically of the hardness, which in comparison with the hot stamped plate and the resistance spot itself, it is a much lower value and in a very localized zone.

If instead of resistance spot welding in boron steel with a high or ultra-high strength, said weld is performed in a localized zone Z previously tempered by the action of the diode laser, and therefore, of lower yield strength, the difference between the mechanical properties of the HAZ, the base metal of the stamped plate and the weld spots is fewer. The crack will thereby start somewhere other than the HAZ, specifically in the base metal.

In a first embodiment, the component is formed by a hot stamped part from original USIBOR® 1500 P steel sheet 1.7 mm thick, with a protective silicon and aluminium-based coating, and the shaded part of the component comprises a single localized zone Z of 200 cm² which was subsequently irradiated with a 6 KW power laser beam, at a rate of advance of 8 mm/s, the laser format being of the type which irradiates surfaces based on dots with a variable surface of approximately 1800 mm² and its temperature having been raised until reaching 680 °C. After reaching said temperature, the component was left to cool at room temperature.

Tests conducted with this practical example allowed obtaining a finished component with a tensile strength value of the metal of 740 MPa, which represents a 50% reduction with respect to the tensile strength of a similar component lacking a localized zone Z subjected to a heat treatment after hot stamping the component. With respect to the elongation, an A80 value of 11 % was obtained with the laser treatment, which translates into a 120% elongation increase with respect to the elongation of a similar component lacking localized zone Z subjected to a heat treatment after hot stamping the component.

In a second embodiment, the component was formed by a hot stamped part from original USIBOR® 1500 P steel sheet 1.3 mm thick. The shaded part of the component comprised a single localized zone Z irradiated with a 500 W power laser beam at a rate of advance of 8 mm/s, the irradiated surface being 100 cm² and having a laser format in the form of dots with a surface of approximately 510 mm². The temperature of the laser during irradiation reached 650 °C and the component was then left to cool at room temperature. Tests conducted with this practical example allowed obtaining a finished component with a tensile strength value of the metal of 623 MPa, which represents a 58% reduction with respect to the tensile strength shown by a similar component lacking localized zone Z subjected to a heat treatment after hot stamping the component. With respect to elongation, an A80 value of 6% was achieved with the laser treatment, which translates into a 20% elongation increase with respect to the elongation of a similar component lacking a localized zone Z subjected to a heat treatment after hot stamping the component.

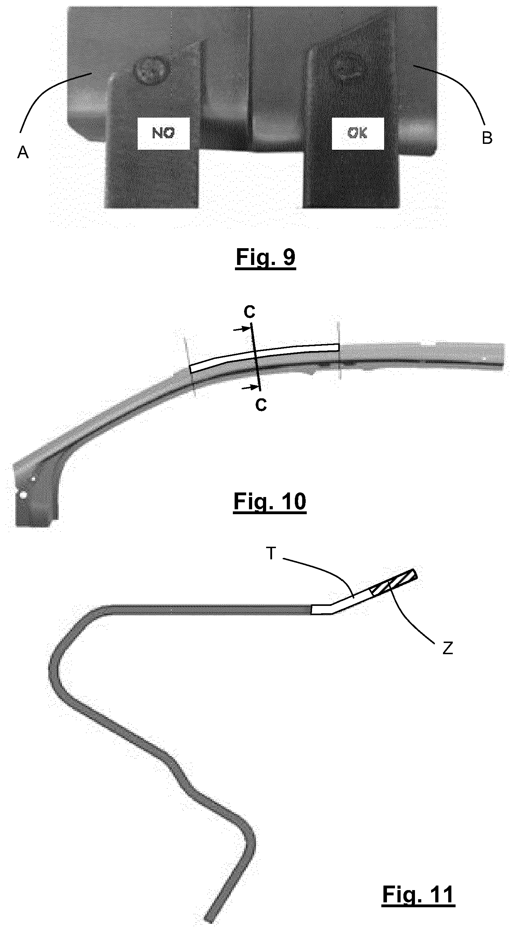

Another structural component of a vehicle where the mentioned treatment can be applied has been pointed out on part of the body of a vehicle in Figure 10, specifically, the component which forms the upright between the front door and the plate glass. As can be seen in Figure 11, corresponding to the section according to section C-C of Figure 10, the localized zone Z has been subjected to the mentioned heat treatment by means of a diode laser beam followed by cooling at room temperature. The zone of transition T between the zone Z and the rest of the structural component which has not been subjected to the heat treatment by means of the diode laser beam has also been indicated in Figure 11.

Tests similar to previous tests performed in other components subjected to the same described method, irradiating a localized zone Z with a diode laser beam of a power comprised between 500 W and 6 kW, reaching a temperature comprised between 650 °C and 680 °C and using a laser format in the form of dots with a surface comprised between 1800 mm² and 510 mm², then leaving the component to cool at room temperature, have allowed obtaining optimal process values in the yield strength reduction and in the elongation increase, specifically, a tensile strength value of the metal of 590 MPa and an A80 value of 11 % in the treated zone of the component.

To perform the tempering by means of the diode laser, an optic which can magnify the laser beam to the suitable size is necessary. Since the energy distribution is constant in the entire laser beam, the entire zone magnified by the optic applies the same temperature on the localized zone or localized zones. This allows using optics of different shapes, for example 8 mm x 10 mm, 8 mm x 20 mm, 15 mm x 30 mm rectangles, etc.

Therefore, the localized zone or zones Z irradiated with the laser can be irradiated according to different distribution patterns, like those shown by way of example in Figures 4, 5, 6 and 7, and according to the format of the laser beam used (see Figure 3).

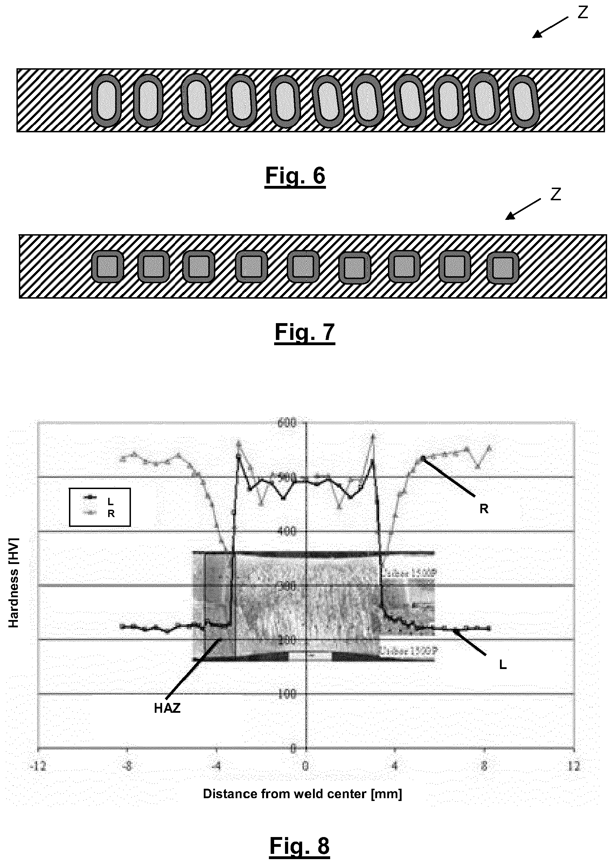

Figure 8 shows the hardness results (Vickers) obtained after having applied the method of the invention for the manufacture of a structural component formed by two parts connected by spot welding in a localized zone Z of the first part, which has been selectively subjected, after the formation of the first part, to a subsequent heat treatment by means of a high power diode laser beam followed by a cooling step to change its microstructure. The results of said method are those corresponding to graph L, with a darker line, while the other reference graph, graph R, corresponds to the hardness results of a structural component formed by two parts connected by spot welding in a localized zone Z of one of them which has not been subjected to the mentioned heat treatment. Both graphs belong to a cross-section of the respective structural component in the spot welding connection zone, made of USIBOR® 1500P steel.

By comparing both graphs, it is observed that the hardness of the heat affected zone (HAZ) due to the spot weld of the structural component which has not been treated (graph R) radically decreases, while the structural component that has been treated (graph L) does not have this problem. For example, in the zone of the structural component not treated where the spot weld has been performed, the hardness decreases approximately from 480 HV to 330 HV, while in the graph of the structural component according to the invention, no considerable variations are observed, the hardness in the heat affected zone (HAZ) being maintained at about 225 HV.

Specifically, the localized zone Z of the first part of the structural component the hardness values of which are those shown in graph R of Figure 8 was irradiated with a diode laser beam of a power comprised between 1 and 4 kW, the irradiated surface being 100 cm² and having a laser format in the form of dots with a surface between 800 and 1000 mm² approximately. The temperature of the laser during irradiation was comprised between 600 °C and 800 °C, and the component was then left to cool at room temperature.

Figure 9 partially shows two structural components each formed by two USIBOR® 1500P steel parts with a silicon and aluminium-based coating, connected by spot welding. The structural component on the right, particularly the zone of the first part B where it was spot welded, was subjected before said welding to the same treatment as that described in the preceding paragraph, unlike the zone of the first part A of the structural component on the left. Both components were subjected to a tensile test until breakage, which consists of applying a tensile force on the second part of each structural component until breakage of the structural components. As can be seen in Figure 9, the breakage of the component on the left started in the heat affected zone (HAZ) of the spot weld, while said heat affected zone (HAZ) in the component on the right remained intact.

## Claims

1. A method for the manufacture of a part of a structural component of a vehicle, such as an automotive vehicle, made up of a first part connected to a second part by spot welding,
wherein at least the first part is made of a boron steel plate with a thickness comprised between 1 and 3 mm and provided with an aluminium and silicon protective coating,
which has been subjected to a prior hot stamping formation operation, and the tensile strength of the first part measured after hot stamping is comprised between 1200 MPa and 1600 MPa
**characterized in that**
the method comprises a treatment of improvement of the spot weldability of the first part before connecting the first part to the second part by spot welding,
said treatment of improving the spot weldability comprising subjecting at least one localized and previously selected zone of the first part to a heat treatment by irradiating said zone with a diode laser beam of a power comprised between 500 W and 6 kW and using an optic to magnify the laser beam to a suitable size until reaching a temperature comprised between 400 °C and 900 °C,
and being followed by leaving said zone of the first part to cool at a cooling rate equal to or less than 10 °C/s,
providing said localized zone with an intentionally lower martensite content and accordingly with a lower yield strength and greater elongation in comparison with those of its adjacent zones not subjected to the treatment of improvement of the spot weldability.

2. The method according to claim 1, **characterized in that** the cooling rate equal to or less than 10 °C/s is achieved by leaving the first part of the structural component to cool at room temperature or by subjecting the localized zone to a controlled cooling operation.

3. The method according to claim 1 or 2, **characterized in that** the treatment by irradiating at least a localized zone of the first part of the structural component is done by marking out a predetermined figure thereon by means of a diode laser beam with an optic having a parallelepiped cross-section, the rate of advance of the laser beam being from 4 to 20 mm/s.

4. The method according to claim 3, **characterized in that** the treatment of improvement of the spot weldability of the first part before connecting the first part to the second part of the structural component comprises the operation of irradiating one and the same localized zone, or at least part of the localized zone more than once with the diode laser beam.

5. The method according to any one of claims 1 to 4, **characterized in that** the treatment of improvement of the spot weldability of the first part comprises subjecting several localized zones to a heat treatment by irradiating each localized zone with a diode laser beam of a power comprised between 500 W and 6 kW until reaching a temperature comprised between 400 °C and 900 °C, followed by leaving the localized zones of the first part to cool at a cooling rate equal or less than 10 °C/s, said localized zones having the form of specks, stains or strips adjacent to one another.

## Patentansprüche

1. Ein Verfahren zur Herstellung eines Bauteils einer strukturellen Komponente eines Fahrzeuges, wie zum Beispiel eines Kraftfahrzeuges, welches aus einem mit einem zweiten Bauteil durch Punktschweißung verbundenen ersten Bauteil besteht,
wobei mindestens das erste Bauteil aus einer Borstahlplatte mit einer Dicke von zwischen 1 und 3 mm besteht und mit einer Schutzbeschichtung aus Aluminium und Silicium verstehen ist,
welche vorher einem Formungsverfahren durch Presshärtung unterzogen worden ist, und wobei die Zugfestigkeit des ersten Bauteils gemessen nach der Presshärtung bei zwischen 1200 MPa und 1600 MPa liegt
**dadurch gekennzeichnet, dass**
das Verfahren eine Behandlung zur Verbesserung der Punktschweißbarkeit des ersten Bauteils umfasst, bevor das erste Bauteil mit dem zweiten Bauteil durch Punktschweißung verbunden wird,
wobei die Behandlung zur Verbesserung der Punktschweißbarkeit das Unterziehen von mindestens einem örtlich festgelegten und vorher ausgewählten Bereich des ersten Bauteils einer Wärmebehandlung umfasst, indem der Bereich mit einem Diodenlaserstrahl einer Leistung von zwischen 500 W und 6 kW und unter Verwendung von einer Optik zur Vergrößerung des Laserstrahls bis zu einer geeigneten Größe bestrahlt wird, bis eine Temperatur von zwischen 400 °C und 900 °C erreicht wird,
und wobei daraufhin die Abkühlung des Bereichs des ersten Bauteils bei einer Abkühlgeschwindigkeit von 10 °C/s oder geringer veranlasst wird,
das Versehen des örtlich festgelegten Bereichs mit einem absichtlich geringeren Martensitgehalt und entsprechend einer geringeren Streckfestigkeit und einer höheren Streckdehnung im Vergleich zu denen von seinen der Behandlung zur Verbesserung der Punktschweißbarkeit nicht unterzogenen angrenzenden Bereichen.

2. Das Verfahren nach Anspruch 1, **dadurch gekennzeichnet, dass** die Abkühlgeschwindigkeit von 10 °C/s oder geringer indem erreicht wird, dass die Abkühlung des ersten Bauteils der strukturellen Komponente bei Raumtemperatur veranlasst wird oder den örtlich festgelegten Bereich einem Verfahren kontrollierter Abkühlung unterzogen wird.

3. Das Verfahren nach Anspruch 1 oder 2, **dadurch gekennzeichnet, dass** die Behandlung, durch die mindestens einen örtlich festgelegten Bereich des ersten Bauteils der strukturellen Komponente bestrahlt wird, durch Markierung einer vorherbestimmten Figur auf dem Bereich mittels eines Diodenlaserstrahls mit einer Optik aufweisend einen spatförmigen Querschnitt erfolgt, wobei die Auffahrgeschwindigkeit des Laserstrahls von 4 bis 20 mm/s reicht.

4. Das Verfahren nach Anspruch 3, **dadurch gekennzeichnet, dass** die Behandlung zur Verbesserung der Punktschweißbarkeit des ersten Bauteils bevor das erste Bauteil mit dem zweiten Bauteil der strukturellen Komponente verbunden wird das Verfahren umfasst, indem ein und derselbe örtlich festgelegter Bereich, oder zumindest ein Teil des örtlich festgelegten Bereichs, mehr als einmal mit dem Diodenlaserstrahl bestrahlt wird.

5. Das Verfahren nach einem der Ansprüche 1 bis 4, **dadurch gekennzeichnet, dass** die Behandlung zur Verbesserung der Punktschweißbarkeit des ersten Bauteils das Unterziehen von mehreren örtlich festgelegten Bereichen einer Wärmebehandlung umfasst, indem jeder örtlich festgelegte Bereich mit einem Diodenlaserstrahl einer Leistung von zwischen 500 W und 6 kW bestrahlt wird, bis eine Temperatur von zwischen 400 °C und 900 °C erreicht wird und daraufhin die Abkühlung der örtlich festgelegten Bereiche des ersten Bauteils bei einer Abkühlgeschwindigkeit von 10 °C/s oder geringer veranlasst wird, wobei die örtlich festgelegten Bereiche die Form von aneinander angrenzenden Stellen, Flecken oder Streifen hat.

## Revendications

1. Un procédé de fabrication d'un élément pour un composant structurel d'un véhicule, par exemple, d'un véhicule automobile, constitué d'un premier élément connecté à un deuxième élément moyennant soudage par points,
dans lequel au moins le premier élément est constitué d'une plaque en acier au bore ayant une épaisseur d'entre 1 et 3 mm et fournie avec un revêtement d'aluminium et de silice,
qui a été soumise auparavant à une opération de formage par estampage à chaud, et la résistance à la traction du premier élément mesurée après le formage à chaud est d'entre 1200 MPa et 1600 MPa
**caractérisé en ce que**
le procédé comprend un traitement pour améliorer la capacité de soudage par points du premier élément avant de connecter le premier élément au deuxième élément moyennant soudage par points,
dans lequel ledit traitement pour améliorer la capacité de soudage par points comprend soumettre au moins une région localisée et sélectionnée auparavant du premier élément à un traitement thermique en irradiant ladite région avec un faisceau de diode laser d'une puissance d'entre 500 W et 6 kW et en utilisant une optique pour augmenter le faisceau de laser jusqu'à une taille appropriée jusqu'à atteindre une température d'entre 400 °C et 900 °C,
et en laissant refroidir ensuite ladite région du premier élément à une vitesse de refroidissement égale ou inférieure à 10 °C/s,
douer ladite une région localisée d'une teneur intentionnellement inférieure en martensite et conformément à une limite d'élasticité inférieure et à un allongement supérieur en comparaison avec ceux de ses régions contigües qui n'ont pas été soumises au traitement pour améliorer la capacité de soudage par points.

2. Le procédé selon la revendication 1, **caractérisé en ce que** la vitesse de refroidissement égale ou inférieure à 10 °C/s est atteinte en laissant refroidir le premier élément du composant structurel à température ambiante ou en soumettant la région localisée à une opération de refroidissement contrôlé.

3. Le procédé selon la revendication 1 ou 2, **caractérisé en ce que** le traitement dans lequel au moins une région localisée du premier élément du composant structurel est irradiée est effectué en marquant une figure prédéterminée sur celle-ci moyennant un faisceau de diode laser avec une optique d'une section de parallélépipède, la vitesse d'avancement du faisceau de laser étant de 4 à 20 mm/s.

4. Le procédé selon la revendication 3, **caractérisé en ce que** le traitement pour améliorer la capacité de soudage par points du premier élément avant de connecter le premier élément au deuxième élément du composant structurel comprend l'opération d'irradier une seule et même région localisée, ou au moins une partie de la région localisée plus d'une fois avec le faisceau de diode laser.

5. Le procédé selon l'une quelconque des revendications 1 à 4, **caractérisé en ce que** le traitement pour améliorer la capacité de soudage par points du premier élément comprend soumettre plusieurs régions localisées à un traitement thermique en irradiant chaque région localisée avec un faisceau de diode laser d'une puissance d'entre 500 W et 6 kW jusqu'à atteindre une température d'entre 400 °C et 900 °C, et laisser ensuite refroidir les régions localisées du premier élément à une vitesse de refroidissement égale ou inférieure à 10 °C/s, étant lesdites régions localisées en forme de taches, de macules ou de bandes contigües les unes aux autres.
